## Europäisches Patentamt

## European Patent Office

## Office européen des brevets

(19)

(11) Veröffentlichungsnummer: **0 075 809**
**B1**

(12) ## EUROPÄISCHE PATENTSCHRIFT

(45) Veröffentlichungstag der Patentschrift:
**10.04.85**

(51) Int. Cl.⁴: **B 29 C 47/20,** B 29 L 23/00

(21) Anmeldenummer: **82108621.2**

(22) Anmeldetag: **18.09.82**

(54) **Vorrichtung zur Herstellung von Rohren aus plastischen Massen.**

(30) Priorität: **26.09.81 DE 3138356**
**03.05.82 DE 3216377**

(43) Veröffentlichungstag der Anmeldung:
**06.04.83 Patentblatt 83/14**

(45) Bekanntmachung des Hinweises auf die Patenterteilung:
**10.04.85 Patentblatt 85/15**

(84) Benannte Vertragsstaaten:
**AT BE CH DE FR GB IT LI LU NL SE**

(56) Entgegenhaltungen:
**DE - C - 961 130**
**DE - C - 961 211**
**US - A - 2 665 722**
**US - A - 3 172 437**

(73) Patentinhaber: **Gneuss, Detlef, Am hohen Ufer 2a,
D-4970 Bad Oeynhausen (DE)**

(72) Erfinder: **Gneuss, Detlef, Am hohen Ufer 2a, D-4970 Bad
Oeynhausen (DE)**

(74) Vertreter: **Müller, Gerd et al, Patentanwälte F.W.
Hemmerich Gerd Müller, Dipl.-Ing. D. Grosse Felix
Pollmeier Hammerstrasse 2, D-5900 Siegen 1 (DE)**

ACTORUM AG

## Beschreibung

Die Erfindung bezieht sich auf eine Vorrichtung zur Herstellung von Rohren aus thermoplastischem Kunststoff, bestehend aus einem an eine Plastifiziereinheit anschliessbaren Spritzkopf mit einem ringförmigen Düsenspalt, der von einem ortsfest im Spritzkopfgehäuse gehaltenen Dorn und einem das nach aussen gerichtete Ende des Dornes mit Abstand umschliessenden, rohrförmigen Mundstück begrenzt ist, wobei sich das Mundstück über eine kugelkalottenartige Lagerung stirnseitig am Spritzkopfgehäuse abstützt und mittels Schrauben gesichert ist.

Aus der DE-C Nr. 961211 ist eine Vorrichtung zur Herstellung von hohlen Strängen aus Kunststoff bekannt, bei der ein Spritzkopf an eine als Schneckenextruder ausgebildete Plastifiziereinheit angeschlossen ist. In dem Spritzkopf ist ein ringförmiger Düsenspalt vorhanden, der von einem ortsfesten, im Spritzkopfgehäuse gehaltenen Dorn und einem das nach aussen gerichtete Ende des Dornes mit Abstand umschliessenden, ringförmigen Mundstück begrenzt ist. Das Mundstück wird dabei mit radialem Spiel in einer mit dem Spritzkopfgehäuse verbundenen Buchse aufgenommen und kann durch mehrere, radial in der Buchse eingesetzte Schrauben zur Erzielung eines gleichmässigen Düsenspaltes eingestellt werden. Das genaue Einstellen des Düsenspaltes ist jedoch schwierig und zeitraubend, da jeweils vor dem Anziehen einer Stellschraube mindestens eine andere Stellschraube gelöst werden muss. Zu dieser Einstellung ist immer ein besonderes Werkzeug erforderlich.

In der DE-C Nr. 961130 ist eine Vorrichtung zur Herstellung von Schläuchen aus organischen, plastischen Kunststoffen offenbart, bei der in einem Spritzkopf ebenfalls ein von einem ortsfesten Dorn und einem ringförmigen Mundstück begrenzter Düsenspalt vorhanden ist. Das Mundstück stützt sich hier über eine kugelkalottenartige Lagerung am Spritzkopfgehäuse ab. Zur eigentlichen Sicherung des Mundstückes am Spritzkopfgehäuse sind sechs Schrauben vorgesehen, über die das Mundstück radial zum Dorn eingestellt werden kann. Für das Einstellen des Mundstückes müssen auch hier vor dem Anziehen einer Schraube andere Schrauben gelöst werden, wozu ebenfalls ein besonderes Werkzeug erforderlich ist.

Bei beiden bekannten Vorrichtung besteht auch hier der Nachteil, dass infolge der Vielzahl der Schrauben eine exakte Einstellung des Düsenspaltes kaum zu erreichen ist.

Der Erfindung liegt deshalb die Aufgabe zugrunde, eine Vorrichtung zur Herstellung von Rohren aus plastischen Massen, insbesondere aus thermoplastischem Kunststoff so auszubilden, dass in einfacher und sicherer Weise und ohne besondere Werkzeuge eine exakte Einstellung des ringförmigen Düsenspaltes erfolgen kann.

Zur Lösung dieser Aufgabe wird erfindungsgemäss vorgeschlagen, dass ausserhalb der kugelkalottenartigen Lagerung zwischen dem Spritzkopfgehäuse und dem Mundstück mindestens zwei ringförmige, relativ gegeneinander verdrehbare Schrägscheiben und/oder mindestens drei gleichmässig verteilte, in axialer Richtung verstellbare Abstützelemente angeordnet sind, wobei darüber hinaus zwischen der stirnseitigen Endfläche des Spritzgehäuses und der zugewandten entsprechenden stirnseitigen Fläche des Mundstückes ein Spalt vorgesehen ist.

Bei einer Verdrehung der Schrägscheiben gegeneinander und/oder einer axialen Verstellung der Abstützelemente wird das Mundstück, das über vorgespannte Federn mittels Schrauben am Spritzkopfgehäuse gehalten ist, in Abhängigkeit zum Drehwinkel der Schrägscheiben und/oder von der axialen Verstellung der Abstützelemente nur geringfügig verschwenkt, so dass innerhalb kürzester Zeit eine einfache und genaue Einstellung des Düsenspaltes erreicht wird. Bei der gleichzeitigen Verwendung der Schrägscheiben und der Abstützelemente dienen die Abstützelemente dann lediglich dazu, die Schrägscheiben zu justieren bzw. die Nullage derselben einzustellen.

Ausgestaltungen und Weiterbildungen der erfindungsgemässen Vorrichtung sind den Patentansprüchen 2 bis 14 entnehmbar.

Die Erfindung wird nachfolgend anhand der in der Zeichnung dargestellten Ausführungsbeispiele näher erläutert. Dabei zeigen

Fig. 1 einen Spritzkopf gemäss der Erfindung im Schnitt,

Fig. 2 ein Schrägscheibenpaar im Schnitt,

Fig. 3 eine andere Ausführungsform eines Spritzkopfes gemäss der Erfindung im Schnitt, und

Fig. 4 eine weitere Ausführungsform des Spritzkopfes gemäss der Erfindung.

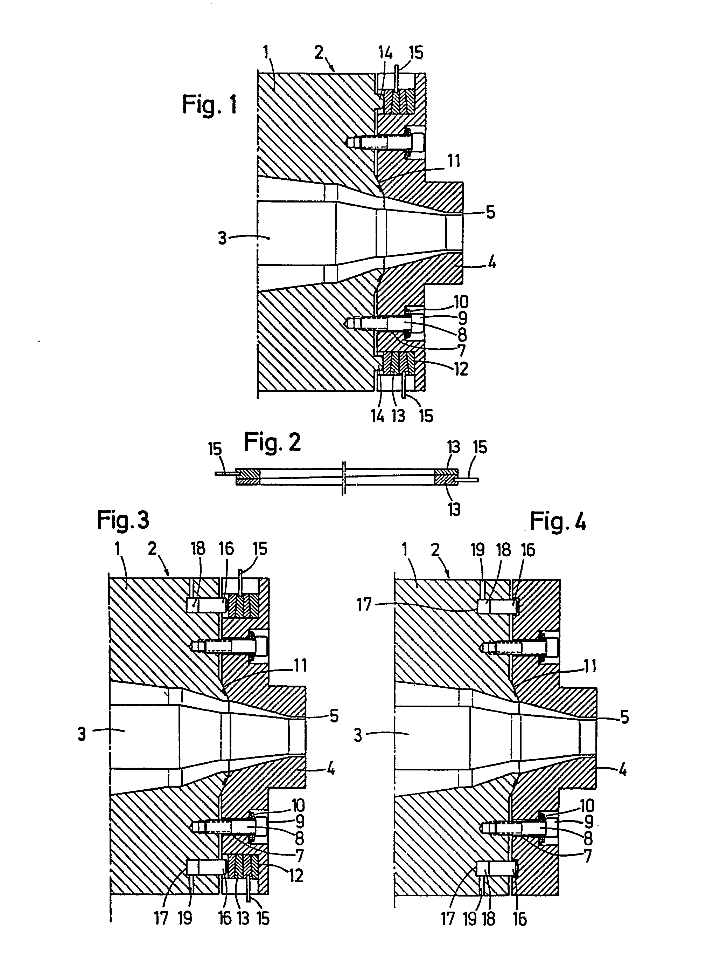

Von einer Vorrichtung zur Herstellung von Rohren aus thermoplastischem Kunststoff ist in der Fig. 1 der Zeichnung ausschnittsweise das Gehäuse 1 eines Spritzkopfes 2 dargestellt, das in an sich bekannter, nicht gezeigter Weise an eine beispielsweise als Schneckenextruder ausgebildete Plastifiziereinheit angeschlossen ist. In dem Spritzkopfgehäuse 1 ist ein Dorn 3 in an sich bekannter Weise zentrisch gehalten, der mit Abstand über das Gehäuse 1 hinausragt. In diesem Bereich ist der Dorn 3 mit Abstand von einem Mundstück 4 umgeben, so dass zwischen dem Dorn 3 und dem Mundstück 4 ein ringförmiger Düsenspalt 5 gebildet ist. Das Mundstück 4 stützt sich über eine kugelkalottenartige Lagerung stirnseitig am Spritzkopfgehäuse 1 ab und weist mehrere Bohrungen 7 zur Aufnahme von Befestigungsschrauben 8 auf, die unterhalb des Schraubenkopfes 9 mit Tellerfedern 10 versehen sind. Dies ermöglicht ein geringfügiges Schwenken des Mundstückes 4 auf der kugelkalottenartigen Lagerfläche 11.

In dem gezeichneten Ausführungsbeispiel weist das Mundstück 4 an seiner dem Spritzkopfgehäuse 1 zugewandten Fläche eine axiale Ringnut 12 auf, in die in diesem Ausführungsbeispiel vier ringförmige Schrägscheiben 13 eingesetzt sind. Diese Schrägscheiben sind, wie in Fig. 2 gezeigt, ausgebildet, wobei sich jeweils zwei Schrägscheiben 13 zu einem Ringscheibenpaar ergänzen. Im Bereich der Ringnut 12 weist die freie Stirnfläche des Ge-.

häuses einen umlaufenden Vorsprung 14 auf, der ggf. unterbrochen sein kann. An diesem Vorsprung 14 stützt sich die dem Spritzkopfgehäuse 1 zugewandte Schrägscheibe 13 ab. Im erläuterten Ausführungsbeispiel sind die beiden inneren Schrägscheiben 13 mit jeweils mindestens einem Verstellhebel 15 ausgerüstet, über die diese Schrägscheiben 13 gegeneinander verdreht werden können. Bei dieser Verdrehung der Schrägscheiben 13 wird das Mundstück 4 geringfügig verschwenkt. Durch diese Verschwenkung des Mundstückes 4 ist es möglich, den Düsenspalt in der gewünschten Weise einzustellen bzw. das Mundstück 4 zum Dorn 3 zu zentrieren.

In Abänderung dieses Ausführungsbeispieles ist es möglich, die die Schrägscheiben 13 aufnehmende Ringnut 12 im Spritzkopfgehäuse 1 vorzusehen. Das Mundstück 4 muss dann einen dem Vorsprung 14 entsprechenden Vorsprung aufweisen. Auch können die Schrägscheiben 13 direkt zwischen den freien Stirnflächen des Mundstückes 4 und des Spritzkopfgehäuses 1 angeordnet sein. Dabei ist es möglich, dass die nach innen gerichteten Schrägflächen der beiden äusseren Schrägscheiben 13 direkt am Gehäuse 1 bzw. am Mundstück 4 ausgearbeitet sind. Um eine Drehbewegung der Schrägscheiben 13 zu erleichtern, ist es möglich, zwischen zwei benachbarten Schrägscheiben 13 Laufrollen anzuordnen. Ferner kann zumindest eine Schrägscheibe durch kegelstumpfförmige Rollen ersetzt werden. Darüber hinaus kann dem Mundstück 4 ein besonderer Befestigungsring zugeordnet sein und die Schrägscheiben 13 sind zwischen dem Spritzkopfgehäuse 1 und dem Befestigungsring angeordnet. Bei dem Ausführungsbeispiel gemäss Fig. 3 ist der umlaufende Vorsprung 14 der Fig. 1 beispielsweise durch mindestens drei in axialer Richtung verstellbare Abstützelemente 16 ersetzt. Diese Abstützelemente 16 sind gleichmässig über die Fläche der Schrägscheiben 13 verteilt angeordnet und als Kolben ausgebildet, die von zylindrischen Bohrungen 17 im Gehäuse 1 aufgenommen werden. Dabei sind die Abstützelemente 16 axial verschiebbar in den Bohrungen 17 geführt und gegenüber der Wandung der Bohrung abgedichtet. Die Bohrungen 17 sind um ein vorbestimmtes Mass länger als die Abstützelemente 16 ausgearbeitet, so dass stets in jeder Bohrung 17 ein freier, durch das jeweilige Abstützelement 16 abgeschlossener Raum 18 entsteht. Jeder Raum 18 ist über einen Kanal 19 an eine nicht gezeichnete, hydraulische Druckmittelleitung angeschlossen, über die Druckmittel in die Räume 18 eingebracht werden kann. Die einzelnen Räume 18 sind beispielsweise über eine elektronische Steuerung, getrennt mit Druckmittel beaufschlagbar, so dass die Lage der Abstützelemente 16 in den Bohrungen 17 und damit eine Justierung bzw. Nullageneinstellung der Schrägscheiben 13 erfolgen kann. Aus dieser Nullage werden dann die Schrägscheiben 13 gegeneinander verdreht und damit das Mundstück 4 zur Einstellung des Düsenspaltes verschwenkt.

Bei dem Ausführungsbeispiel gemäss Fig. 4 sind keine Schrägscheiben 13 vorgesehen und die Abstützelemente 16 greifen direkt am Mundstück 4 an. Bei dieser Ausbildung erfolgt die Nullageneinstellung bzw. Justierung und die Verschwenkung des Mundstückes 4 zur Einstellung des Düsenspaltes ausschliesslich über die Abstützelemente 16.

In Abänderung der Ausführungsbeispiele der Fig. 3 und 4 ist es möglich, die kolbenartigen Abstützelemente beispielsweise durch Schrauben zu ersetzen. Dabei können den einzelnen Schrauben Stellvorrichtungen zugeordnet sein, durch die die einzelnen Schrauben abhängig voneinander gedreht und damit in axialer Richtung verstellt bzw. eingestellt werden können. Über eine besondere Steuereinrichtung ist auch hier eine exakte Einstellung des Mundstückes 4 möglich.

## Patentansprüche

1. Vorrichtung zur Herstellung von Rohren aus thermoplastischem Kunststoff, bestehend aus einem an eine Plastifiziereinheit anschliessbaren Spritzkopf (2) mit einem ringförmigen Düsenspalt (5), der von einem ortsfest im Spritzkopfgehäuse gehaltenen Dorn (3) und einem das nach aussen gerichtete Ende des Dornes (3) mit Abstand umschliessenden, rohrförmigen Mundstück (4) begrenzt ist, wobei sich das Mundstück (4) über eine kugelkalottenartige Lagerung (11) stirnseitig am Spritzkopfgehäuse abstützt und mittels Schrauben (8) gesichert ist, dadurch gekennzeichnet, dass ausserhalb der kugelkalottenartigen Lagerung zwischen dem Spritzkopfgehäuse (1) und dem Mundstück (4) mindestens zwei ringförmige, relativ gegeneinander verdrehbare Schrägscheiben (13) und/oder mindestens drei gleichmässig verteilte, in axialer Richtung verstellbare Abstützelemente (16) angeordnet sind, wobei darüber hinaus zwischen der stinseitigen Endfläche des Spritzkopfgehäuses (1) und der zugewandten entsprechenden stirnseitigen Fläche des Mundstückes (4) ein Spalt vorgesehen ist.

2. Vorrichtung nach Anspruch 1, dadurch gekennzeichnet, dass die Abstützelemente (16) im Bereich der Schrägscheiben (13) angeordnet sind.

3. Vorrichtung nach einem der Ansprüche 1 oder 2, dadurch gekennzeichnet, dass zwischen dem Spritzkopfgehäuse (1) und dem Mundstück (4) zwei aus jeweils zwei sich ergänzenden Schrägscheiben (13) gebildete Ringscheibenpaare angeordnet sind.

4. Vorrichtung nach mindestens einem der Ansprüche 1 bis 3, dadurch gekennzeichnet, dass die Schrägscheiben (13) in einer axialen Ringnut (12) des Spritzkopfgehäuses (1) oder des Mundstückes (4) angeordnet sind und das Mundstück (4) oder das Spritzkopfgehäuse (1) einem im Bereich dieser Ringnut (12) umlaufenden Vorsprung (14) besitzt.

5. Vorrichtung nach mindestens einem der Ansprüche 1 bis 4, dadurch gekennzeichnet, dass zumindest zwei Schrägscheiben (13) mit mindestens einem Verstellhebel (15) ausgerüstet sind.

6. Vorrichtung nach mindestens einem der Ansprüche 1 bis 4, dadurch gekennzeichnet, dass zumindest zwei Schrägscheiben (13) an ihrer äusseren Mantelfläche mit einer Verzahnung versehen sind.

7. Vorrichtung nach Anspruch 3, dadurch gekennzeichnet, dass zumindest eine der beiden äusseren Schrägscheiben (13) der beiden Ringscheibenpaare ortsfest angeordnet ist.

8. Vorrichtung nach Anspruch 7, dadurch gekennzeichnet, dass die ortsfeste Schrägscheibe einstückig mit dem Spritzkopfgehäuse (1) und/oder dem Mundstück (4) ausgebildet ist.

9. Vorrichtung nach mindestens einem der Ansprüche 1 bis 8, dadurch gekennzeichnet, dass dem Mundstück (4) ein Befestigungsring zugeordnet ist und die Schrägscheiben (13) zwischen dem Spritzgehäuse (1) und dem Befestigungsring angeordnet sind.

10. Vorrichtung nach mindestens einem der Ansprüche 1 bis 9, dadurch gekennzeichnet, dass zwischen zwei Schrägscheiben (13) Laufrollen angeordnet sind.

11. Vorrichtung nach einem der Ansprüche 1 bis 9, dadurch gekennzeichnet, dass zumindest eine Schrägscheibe (13) durch kegelstumpfförmige Rollen gebildet ist.

12. Vorrichtung nach einem der Ansprüche 1 oder 2, dadurch gekennzeichnet, dass die Abstützelemente (16) als Schrauben ausgebildet sind.

13. Vorrichtung nach einem der Ansprüche 1 oder 2, dadurch gekennzeichnet, dass die Abstützelemente (16) als hydraulisch oder pneumatisch beaufschlagbare Kolben ausgebildet sind.

14. Vorrichtung nach einem der Ansprüche 12 oder 13, dadurch gekennzeichnet, dass den Abstützelementen (16) und/oder den Schrägscheiben (13) eine elektronische Steuerung zugeordnet ist.

## Claims

1. Device for the production of tubes out of thermoplastic synthetic material, consisting of an injection head (2), which is connectible to a plastifying unit and has an annular orifice gap (5), of a mandrel (3) held locally fixed in the injection head housing and a tubular mouthpiece (4) enclosing the outwardly directed end of the mandrel (3) at a spacing, wherein the mouthpiece (4) bears by way of a bearing of spherically segmental shape at the end face against the injection head housing and is secured by means of screws (8), characterised in that at least two annular tapered washers (13), which are rotatable one relative to the other, and/or at least three uniformly distributed support elements (16), which are displaceable in axial direction, are arranged between the injection head housing (1) and the mouthpiece (4) externally of the bearing of spherically segmental shape, wherein a gap is provided beyond that between the end surface at the end face of the injection head housing (1) and the facing corresponding surface at the end face of the mouthpiece (4).

2. Device according to Claim 1, characterised in that the support elements (16) are arranged in the region of the tapered washers (13).

3. Device according to Claim 1 or 2, characterised in that two annular washer pairs, each formed from respective two complementary tapered washers (13), are arranged between the injection head housing (1) and the mouthpiece (4).

4. Device according to at least one of the Claims 1 to 3, characterised in that the tapered washers (13) are arranged in an axial annular groove (12) of the injection head housing (1) or of the mouthpiece (4) and the mouthpiece (4) or the injection head housing (1) possesses an encircling projection (14) in the region of this annular groove (12).

5. Device according to at least one of the Claims 1 to 4, characterised in that at least two tapered washers (13) are equipped with at least one displacing lever (15).

6. Device according to at least one of the Claims 1 to 4, characterised in that at least two tapered washers (13) are provided with a toothing at their outer shell surface.

7. Device according to Claim 3, characterised in that at least one of both the outer tapered washers (13) of both the annular washer pairs is arranged to be locally fixed.

8. Device according to Claim 7, characterised in that the locally fixed tapered washer is formed integrally with the injection head housing (1) and/or the mouthpiece (4).

9. Device according to at least one of the Claims 1 to 8, characterised in that a fastening is associated with the mouthpiece (4) and the tapered washers (13) are arranged between the injection head housing (1) and the fastening ring.

10. Device according to at least one of the Claims 1 to 9, characterised in that runner rollers are arranged between two tapered washers (13).

11. Device according to one of the Claims 1 to 9, characterised in that at least one tapered washer (13) is formed by frusto-conical rollers.

12. Device according to Claim 1 or 2, characterised in that the support element (16) are constructed as screws.

13. Device according to Claim 1 or 2, characterised in that the support elements (16) are constructed as hydraulically or pneumatically loadable pistons.

14. Device according to Claim 12 or 13, characterised in that an electronic control is associated with the support elements (16) and/or the tapered washers (13).

## Revendications

1. Dispositif de fabrication de tubes en matière synthétique thermoplastique, composé d'une tête d'injection (2) raccordable à une unité de plastifi- cation et ayant une fente de buse annulaire (5) délimitée par un poinçon (3) retenu fixement dans le carter de la tête d'injection et par un nez de buse tubulaire (4) qui entoure à distance l'extrémité du poinçon (3) dirigée vers l'extérieur, ce nez de buse (4) prenant appui, côté extrémité frontale, sur le carter de la tête d'injection par l'intermédiaire d'un palier (11) en forme de calotte sphérique et étant fixé au moyen de vis (8), caractérisé en ce que, en dehors du palier en forme de calotte sphérique, sont disposées, entre le carter (1) de la tête d'injection et le nez de buse (4), au moins deux disques annulaires inclinés (13) pouvant tourner par rapport l'un à l'autre et/ou au moins trois éléments d'appui (16) uniformément répartis, déplaçables dans le sens axial, une fente étant en outre prévue entre la face d'extrémité frontale du carter (1) de la tête d'injection et la face d'extrémité correspondante adjacente au nez de buse (4).

2. Dispositif selon la revendication 1, caractérisé en ce que les éléments d'appui (16) sont disposés dans le champ des disques inclinés (13).

3. Dispositif selon l'une des revendications 1 ou 2, caractérisé en ce que, entre le carter (1) de la tête d'injection et le nez de buse (4), sont disposées deux paires de disques annulaires formées chacune par deux disques inclinés se complétant.

4. Dispositif selon au moins une des revendications 1 à 3, caractérisé en ce que les disques inclinés (13) sont disposés dans une rainure annulaire axiale (12) du carter (1) de la tête d'injection ou du nez de buse (4), ce dernier ou le carter (1) de la tête d'injection comportant, dans le champ de cette rainure annulaire (12), un saillant périphérique (14).

5. Dispositif selon au moins une des revendications 1 à 4, caractérisé en ce que, au moins, deux disques inclinés (13) sont munis d'au moins un levier de manœuvre.

6. Dispositif selon au moins une des revendications 1 à 4, caractérisé en ce que, au moins, deux disques inclinés (13) sont munis d'une denture à leur pourtour extérieur.

7. Dispositif selon la revendication 3, caractérisé en ce que, au moins, un des deux disques inclinés extérieurs (13) des deux paires de disques annulaires est disposé fixe.

8. Dispositif selon la revendication 7, caractérisé en ce que le disque incliné fixe est solidaire du carter (1) de la tête d'injection et/ou du nez de buse (4).

9. Dispositif selon au moins une des revendications 1 à 8, caractérisé en ce qu'une bague de fixation est affectée au nez de buse (4), les disques inclinés (13) étant disposés entre cette bague et le carter (1) de la tête d'injection.

10. Dispositif selon au moins une des revendications 1 à 9, caractérisé en ce que des rouleaux de roulement sont disposés entre deux disques inclinés (13).

11. Dispositif selon l'une des revendications 1 à 9, caractérisé en ce que, au moins, un disque incliné (13) est formé par des rouleaux de forme tronconique.

12. Dispositif selon l'une des revendications 1 ou 2, caractérisé en ce que les éléments d'appui (16) sont conçus sous forme de vis.

13. Dispositif selon l'une des revendications 1 ou 2, caractérisé en ce que les éléments d'appui (16) sont conçus sous forme de pistons commandés hydrauliquement ou pneumatiquement.

14. Dispositif selon l'une des revendications 12 ou 13, caractérisé en ce qu'une commande électronique est affectée aux éléments d'appui (16) et/ou aux disques inclinés (13).

Fig. 1

Fig. 2

Fig. 3

Fig. 4